# DEMANDE DE BREVET EUROPEEN

(11) **EP 1 803 611 A1**
(43) Date de publication de la demande: **04.07.2007**
(21) Numéro de dépôt: 06398001.5
(22) Date de dépôt: 03.01.2006
(51) Int. Cl.: B60R 13/10

(54) **Plaque de signalisation et machines et procédé de fabrication respectifs**

(71) Demandeur: Plates 4 Europe - Fabrico de Matriculas, LDA., 4460-070 Guifoes, Matosinhos (PT)
(72) Inventeur: Sernache Pereira, Armando de Jesus, 4050-380 Porto (PT)
(74) Mandataire: Pelayo de Sousa Henriques, Rui

(57) **Abrégé**

La présente invention se rapporte à une plaque de signalisation (1) intégrant un support (2) et une pellicule réfléchissante (3) susceptible d'être imprimée et qui est obtenue par recours à une machine selon l'invention, cette plaque se caractérisant en ce que la pellicule réfléchissante (3) résulte uniquement de l'assemblage d'une pellicule de base rétroréfléchissante avec une couche de revêtement - sous la forme de gel de revêtement ou à l'état solide de pellicule de revêtement - avec d'environ 10 microns d'épaisseur, celle-là couverte par celle-ci et celle-ci, une fois à l'état solide, est transparente et adéquate à être imprimée dans une imprimante à jet d'encre, et en ce que cette plaque (1) résulte de l'assemblage de cette pellicule réfléchissante (3) déjà imprimée, avec des caractères (7), avec un support (2) transparent, cet assemblage se réalisant par collage (6) sous pression en employant une machine à laminer des plaques de signalisation qui fait aussi partie de la présente invention, ces plaques (1) étant fabriquées selon le procédé également inventé.

## Description

### DOMAINE TECHNIQUE

La présente invention se rapporte à une plaque de signalisation qui comprend une pellicule réfléchissante préparée à être imprimée dans une imprimante à jet d'encre et un support transparent et machines et procédé de fabrication respectifs.

Cette pellicule sert d'élément de base pour, par exemple, l'obtention de plaques d'immatriculation ou d'autre signalisation, notamment de signalisation routière ou publicitaire ou encore la signalétique d'émergence et de sécurité, puisqu'une fois collée contre un support transparent qui ne se détériore pas en présence des différences thermiques, avec la pluie ou d'autres facteurs climatériques, elle garde ses propriétés, les mots ou les caractères figuratifs imprimés n'étant pas détériorés.

### ARRIÈRE-PLAN TECHNOLOGIQUE

On ne connaît pas dans l'état de la technique des plaques de signalisation comme celle inventée qui est destinée à la réalisation de quelqu'une des fonctions au-dessus mentionnées et qui peut être obtenue au moyen d'un procédé de fabrication très simple et pratique.

En ce qui concerne les plaques d'immatriculation, les plaques en aluminium et les plaques en plastique sont d'usage courant.

Les plaques d'immatriculation en aluminium sont, encore présentement, fabriquées selon un procédé où la main-d'oeuvre est importante, ce qui provoque des conséquences négatives sur son coût.

En effet, il est nécessaire, parmi d'autres phases de fabrication, d'estamper les caractères relatifs au numéro d'immatriculation dans la plaque en aluminium. Ce travail est réalisé par un ouvrier qui passe ensuite la plaque par une machine à rouleaux qui lui applique une couche d'encre noire sur les surfaces en relief.

En ce qui concerne les plaques d'immatriculation en plastique, on connaît un procédé de fabrication qui emploie des coupants et un autre qui emploie des autocollants.

Dans le premier cas, lorsque la plaque en plastique est peinte avec les caractères accessoires qui font partie d'une plaque d'immatriculation, on colle, en arrière de celle-ci, une pellicule autocollante en plastique noir.

Ensuite, il faudra à l'ouvrier de sélectionner les coupants relatifs aux caractères désirés pour la fabrication d'une certaine immatriculation, de soumettre la pellicule noire au coupage par action de ces coupants, d'ôter de la plaque la partie de la pellicule noire qui ne correspond pas aux caractères de l'immatriculation et, finalement, de couvrir la partie derrière de la plaque avec une feuille autocollante réfléchissante.

Dans le second cas, c'est à dire, dans le procédé de fabrication qui emploie des caractères autocollants, ceux-ci sont placés et collés manuellement sur la feuille autocollante réfléchissante qu'on colle après sur la plaque d'immatriculation plastique déjà peinte avec les caractères accessoires.

Or, chacun de ces procédés a une caractéristique de main-d'oeuvre importante, et par cette raison la cadence de production est réduite.

En outre, la qualité du produit final est fortement dépendante de l'expérience des ouvriers.

On connaît aussi un procédé de fabrication de plaques d'immatriculation qui emploie une imprimante thermique pour l'impression des caractères.

En face de la présente invention, ce procédé a, aussitôt, la désavantage d'exiger d'équipement d'impression spécifique pour cet effet, cet équipement étant sophistiqué et coûteux.

Au contraire, la plaque de signalisation inventée peut être produite en employant une imprimante à jet d'encre ordinaire selon un procédé de fabrication très simple et versatile comme on décrit ci-dessous plus en détail.

### DESCRIPTION DE L'INVENTION

La plaque de signalisation inventée intègre un support et une pellicule réfléchissante susceptible d'être imprimée. Cette plaque se caractérise par le fait que la pellicule réfléchissante résulte, uniquement, de l'assemblage d'une pellicule de base rétroréfléchissante avec une couche de revêtement transparent avec d'environ 10 microns d'épaisseur, celle-là couverte par celle-ci et celle-ci adéquate à être imprimée dans une imprimante à jet d'encre.

Il ne s'agit pas d'une imprimante avec des caractéristiques spécifiques, mais plutôt d'une imprimante à jet d'encre ordinaire.

La couche de revêtement peut être constituée par un gel de revêtement ou par une pellicule de revêtement, c'est à dire, par ce gel à l'état solide.

La plaque de signalisation inventée se caractérise aussi par le fait qu'elle résulte de l'assemblage de cette pellicule réfléchissante après son impression, soit avec les caractères et symboles obligatoires relatifs à une immatriculation, soit avec une autre symbologie, notamment symbologie relative à la signalisation routière, avec un support transparent, cet assemblage se réalisant par collage sous pression.

A son tour, la pellicule réfléchissante peut résulter de l'assemblage d'une pellicule de base de face rétroréfléchissante adhésive avec une pellicule transparente de revêtement à l'état solide. L'assemblage de ces pellicules est réalisé au moyen de la capacité adhésive de cette pellicule de base.

Alternativement, la pellicule réfléchissante peut résulter du dépôt d'un gel de revêtement sur la face rétroréfléchissante non adhésive d'une pellicule de base. Compte tenu ses caractéristiques intrinsèques, lorsque ce gel est sec, il se solidarise avec la pellicule de base.

La pellicule de base rétroréfléchissante est disponible dans le marché et on peut référer, comme exemple, les pellicules des marques Hexis®, Avery® , ScotchliteTM et Nikkalite.

Relativement à la couche de revêtement il est fondamental qu'elle soit susceptible d'être imprimée dans une imprimante à jet d'encre, quand cette couche se trouve à l'état solide, comme mentionnée auparavant.

Ce revêtement (gel) peut avoir des formulations conformes aux proposées par la INEOS Silicas - bibliographie [1] -, ces formulations employant des pigments de silice comme indiqué ci-dessous:
0,17 g de poids sec d'additif cationique polymérique
35,5 g d'alcool Polyvinylique (15% solution)
6,7 g Polyvinylpirrolidone (30% solides)
88,7 GASIL® mélange de silice (15% solution)

Une autre formulation possible est celle qui emploie des pigments de carbonate de calcium précipité (PCC) comme alternative à la silice.

Un exemple de ceci constitue la proposition de la Sartomer USA - bibliographie [2] - qui, au-delà de ce pigment, emploie un liant de poly(vinyle alcool) (PVOH) hydrolysé partiellement et à un additif cationique de résine styrène-anhydride maléique imide (SMAI).

Selon la Sartomer USA, une formulation typique contiendrait 100 parties de pigments, 7 pph (parts per hundred - parties par centaines) de liant et 1 à 4 pph d'additifs cationiques.

De même, le gel avec la référence commerciale C-123-26 - bibliographie [3] - vendu par l'Ontario Specialty Coatings Corporation de New York est approprié à l'obtention du revêtement transparent qui intègre la pellicule réfléchissante décrite auparavant.

La couche de revêtement obtenue de ce fait est adéquate à être imprimée dans une imprimante à jet d'encre courante. Ce type d'imprimantes peut être acquis à des prix réduits une fois qu'elles sont vendues sur une grande échelle.

La présente invention comprend aussi une machine pour la fabrication de la pellicule réfléchissante au-dessus décrite caractérisée en ce qu'elle est pourvue d'une roue qui tourne selon un axe horizontal et en ce que cette roue est revêtue d'une ferme couche de silicone.

Cette machine se caractérise encore en ce qu'elle est pourvue, sur la partie supérieure de la roue, d'un dispositif en forme de bec de canard, ce dispositif étant préparé pour qu'on lui assemble un réservoir qui renferme du gel. L'ouverture plus grande ou plus petite du bec sert à doser le passage dudit gel.

Elle se caractérise également en ce que, au tour de la roue, il est placé d'au moins un sécheur thermique et d'au moins deux rouleaux. L'un d'entre eux fournit la machine avec la pellicule de base et l'autre - le récepteur - sert à enrouler la pellicule réfléchissante achevée, ces pellicules étant dûment tenues au moyen de tendeurs pourvus également par la machine.

Quand la pellicule réfléchissante résulte de l'assemblage d'une pellicule de base de face rétroréfléchissante adhésive avec une pellicule transparente de revêtement à l'état solide, la machine pour la fabrication de cette pellicule réfléchissante se caractérise en ce que le rouleau récepteur est situé en arrière du dispositif en forme de bec de canard, en ce que le rouleau fournisseur se situe au-dessous du rouleau récepteur, en ce qu'au-dessous de celui-ci se situe un rouleau auxiliaire qui sert à enrouler le fil protecteur de la face rétroréfléchissante adhésive de la pellicule de base et en ce qu'elle dispose d'un petit rouleau métallique.

Ce petit rouleau métallique se situe juste en arrière du dispositif en forme de bec de canard et se trouve adossé contre la couche de silicone de la roue, en fonctionnant soit comme tendeur de la pellicule de base, soit comme rouleau de pression, en forçant cette pellicule à se comprimer contre la pellicule transparente de revêtement à l'état solide au moment où les deux pellicules passent entre ce rouleau et la couche de silicone de revêtement de la roue.

D'autre part, quand la pellicule réfléchissante résulte du dépôt d'un gel de revêtement sur la face rétroréfléchissante non adhésive d'une pellicule de base, la machine pour la fabrication de cette pellicule réfléchissante se caractérise en ce que le rouleau fournisseur de pellicule de base, rétroréfléchissante non adhésive, se situe juste en arrière du dispositif en forme de bec de canard, en ce que, au-dessous de ce rouleau, il se situe le rouleau récepteur et en ce qu'elle dispose de deux petits rouleaux avec la fonction de tendeurs.

Ces rouleaux se situent juste en arrière et au-dessous du dispositif en forme de bec de canard et ils sont adossés contre la couche de silicone de la roue - l'un associé au rouleau fournisseur et l'autre, métallique, associé au rouleau récepteur - en passant d'abord la pellicule de base entre le rouleau tendeur fournisseur et la couche de revêtement de la roue et après entre le rouleau tendeur récepteur et la couche de revêtement de la roue.

Alors, la pellicule de base reste parfaitement tendue et ajustée à la roue, prête à recevoir la couche de revêtement en forme de gel. Au fur et à mesure que la roue tourne, cette couche est soumise à l'action du ou des sécheurs thermiques, en se transformant en pellicule de revêtement qui se solidarise parfaitement avec la pellicule de base.

Ce rouleau tendeur récepteur fonctionne soit comme tendeur, soit comme rouleau de pression, en compressant la pellicule de base contre la pellicule transparente de revêtement.

Quelqu'une des machines mentionnées pour la fabrication d'une pellicule réfléchissante est pourvue d'un dispositif en forme de bec de canard qui peut disposer d'une valve régulatrice de la sortie du gel de revêtement.

A son tour, chaque sécheur thermique de ces machines est pourvu d'un ventilateur et d'une résistance électrique.

L'invention comprend encore une machine pour la fabrication des plaques de signalisation inventées, cette machine étant alimentée par un support transparent et par une pellicule réfléchissante caractérisée en ce qu'elle possède un plateau, une guide ou plus qui servent à ajuster le positionnement entre le support transparent et la pellicule réfléchissante, deux rouleaux de laminage positionnés l'un sur l'autre et qui sont supportés par une structure d'appui en nylon ou en matériel similaire, le rouleau supérieur étant actionné par une manivelle et la distance entre eux étant toujours moindre que l'épaisseur de la plaque de signalisation, et en ce que, au bout du plateau et sur son plan, la structure d'appui est pourvue d'une entaille.

En addition, le rouleau de laminage supérieur peut être réglé en hauteur, ce rouleau étant revêtu par caoutchouc et le rouleau de laminage inférieur étant métallique.

En outre, la guide ou guides qui intègrent cette machine peuvent avoir des mouvements de translation.

Il est encore dans le champ d'action de la présente invention le procédé de fabrication d'une plaque de signalisation selon la décrite déjà, se caractérisant en ce qu'il comprend les étapes suivantes:
- Obtention d'une pellicule réfléchissante susceptible d'être imprimée dans une imprimante à jet d'encre uniquement au moyen de l'assemblage, par collage - soit par les caractéristiques intrinsèques de la couche de revêtement, soit aussi par la capacité adhésive de la pellicule de base - et par pression, d'une pellicule de base rétroréfléchissante avec une couche de revêtement sous la forme de gel ou à l'état solide, en employant en particulier une machine ou les versions de cette machine décrites auparavant.
- Impression de la pellicule réfléchissante dans une imprimante à jet d'encre.
- Collage sous pression de la pellicule réfléchissante déjà imprimée à un support transparent, en employant en particulier une machine comme la décrite auparavant.

En conformité avec ce qu'on a déjà mentionné, la plaque de signalisation inventée peut être obtenue au moyen d'un procédé de fabrication innovateur, très simple, versatile et économique.

Il est simple une fois que la plaque étant constituée par un nombre très réduit d'éléments et ces éléments étant assemblés par des simples procédés, on réduit le nombre d'étapes de fabrication face aux procédés déjà connus et on réduit sa complexité par comparaison avec les procédés mentionnés.

Il est versatile parce que la pellicule réfléchissante peut être produite en continu, ou non, selon les nécessités, en sortant, de préférence, de la première étape de production sous la forme de rouleau.

Cette simplicité et cette versatilité résultent, nécessairement, en économie.

L'impression peut être aussi faite en continu. Pour cela, il suffit de fournir auparavant à l'ordinateur, équipé d'un logiciel adéquat, un listage d'immatriculations, ou un listage des rues, ou d'autre listage capable d'être encadré dans l'objet de l'invention.

Cependant, la présente invention ne permet pas seulement l'obtention de plaques de signalisation sur une grande échelle, c'est à dire, en série et avec des coûts réduits, sans préjudice d'un bon achèvement - comme, par exemple, pour des plaques de publicité - mais elle permet aussi que ces plaques ne soient produites que ponctuellement selon les nécessités.

Dans le cas d'un garage de réparation de voitures sinistrées, ou dans le cas d'un stand de vente de nouvelles voitures, pour qu'ils aient autonomie de production de plaques d'immatriculation ils nécessitent seulement d'acquérir de pellicule réfléchissante en rouleau ou déjà coupée pour cet effet, produite selon la présente invention, et d'avoir une imprimante à jet d'encre ordinaire - liée à un ordinateur de caractéristiques techniques courantes et équipé d'un logiciel adéquat à la normalisation des immatriculations - et d'une machine de laminage selon la décrite dans la présente invention, celle-ci aussi très simple, de dimensions réduites et d'aisé fonctionnement, sans manutention et de coût réduit.

Dans ces cas, les plaques d'immatriculation seront produites selon les nécessités qui résultent, dans le premier cas, de la réparation de voitures sinistrées et, dans le deuxième cas, de la vente de nouvelles voitures et correspondante attribution d'immatriculations.

Un exemple identique pourrait être donné en ce qui concerne les plaques qui identifient les rues, les avenues, etc., qui peuvent être aussi produites selon les nécessités des entités liées à la Mairie.

De cette façon, on démontre la grande versatilité de la présente invention.

### DESCRIPTION DES FIGURES

Dans les figures annexes, présentées à titre d'exemple et non limitatif, on peut observer:

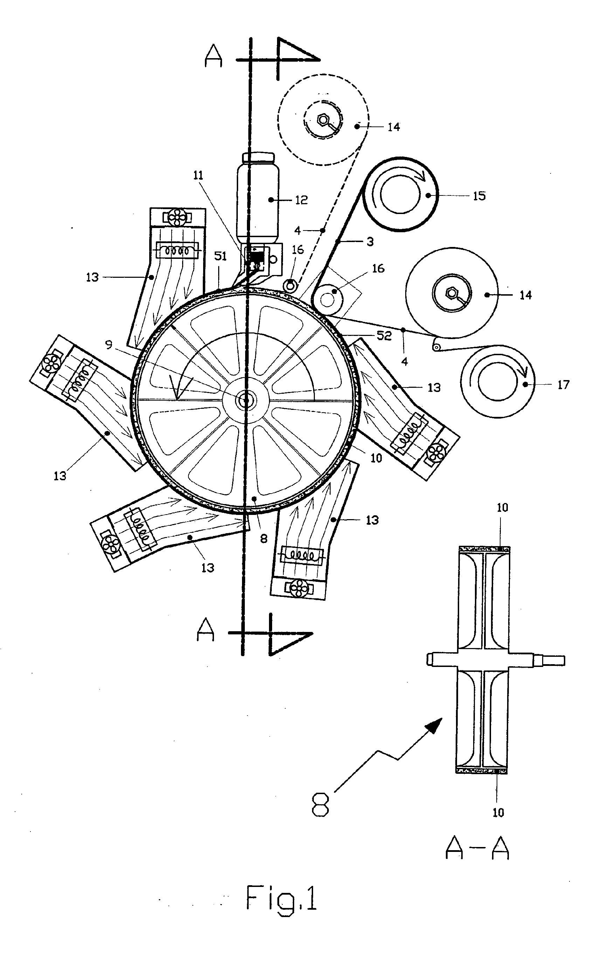

à la figure 1, la représentation schématique d'une machine pour la fabrication d'une pellicule réfléchissante soit que celle-ci résulte de l'assemblage d'une pellicule de base de face rétroréfléchissante adhésive avec une pellicule de revêtement (à l'état solide), soit qu'elle résulte du dépôt d'un gel de revêtement sur la face rétroréfléchissante non adhésive d'une pellicule de base, la coupe AA étant aussi représentée;

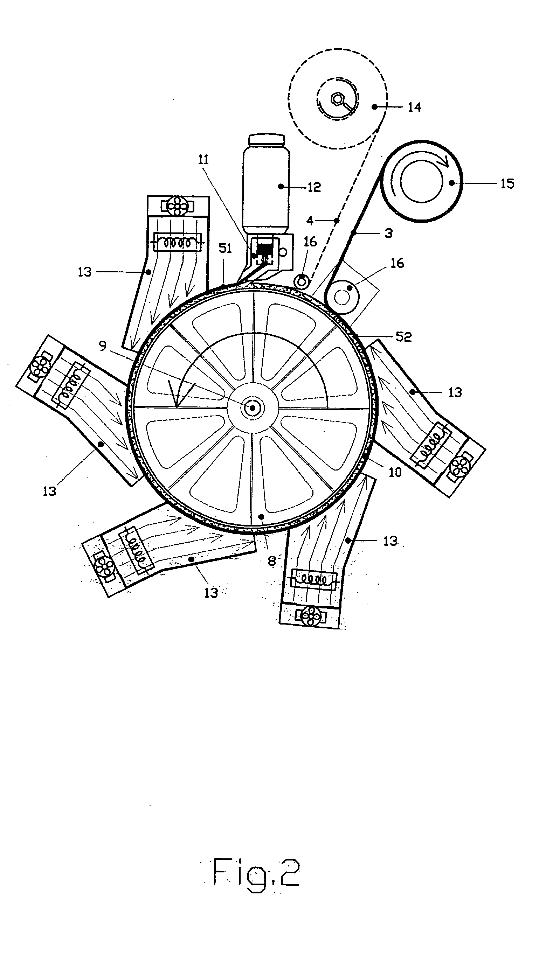

à la figure 2, la représentation schématique d'une machine pour la fabrication d'une pellicule réfléchissante résultante du dépôt d'un gel de revêtement sur la face rétroréfléchissante non adhésive d'une pellicule de base;

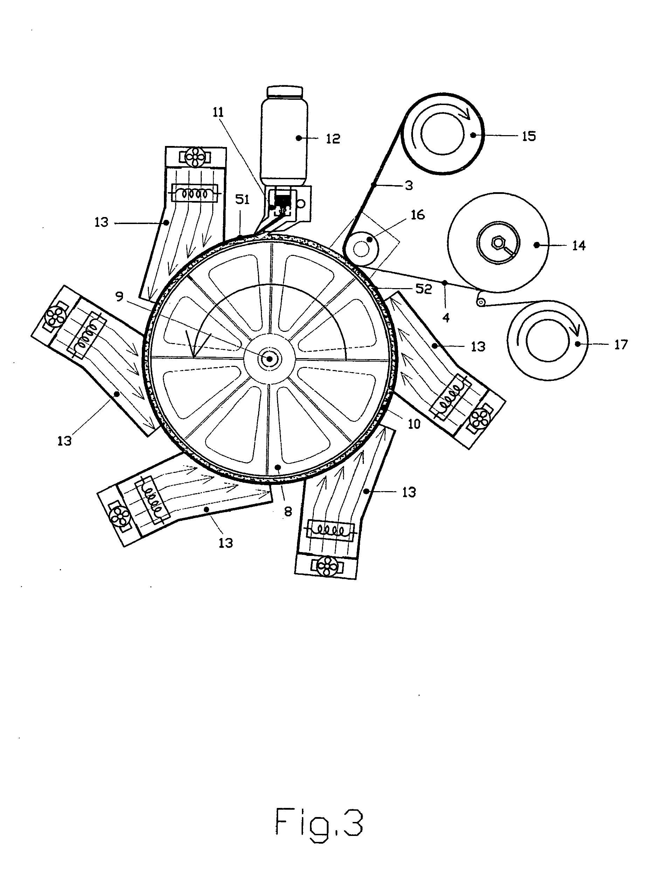

à la figure 3, la représentation schématique d'une machine pour la fabrication d'une pellicule réfléchissante résultante de l'assemblage d'une pellicule de base de face rétroréfléchissante adhésive avec une pellicule de revêtement (à l'état solide);

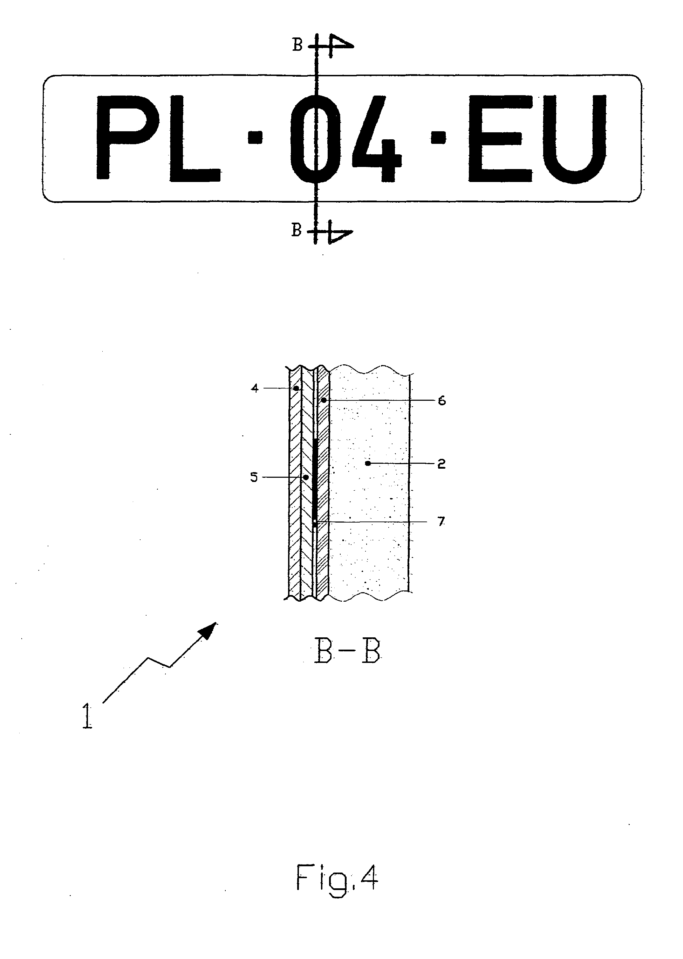

à la figure 4, la représentation d'une plaque de signalisation selon l'inventée, en représentant, en concret, une plaque d'immatriculation ainsi que sa coupe BB;

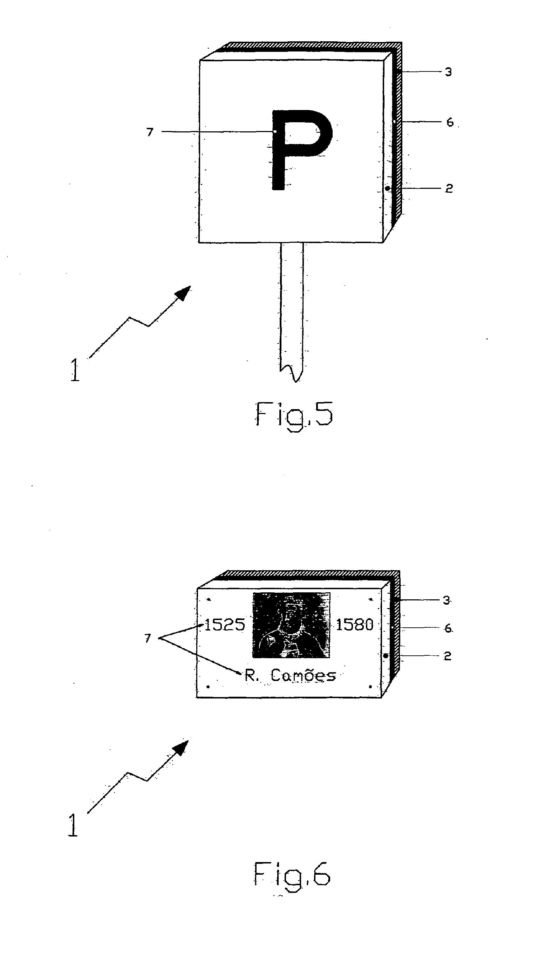

à la figure 5, la représentation d'une plaque de signalisation selon l'inventée, en représentant, en concret, un signal routier;
à la figure 6, la représentation d'une plaque de signalisation selon l'inventée, en représentant, en concret, une plaque qui identifie une rue;

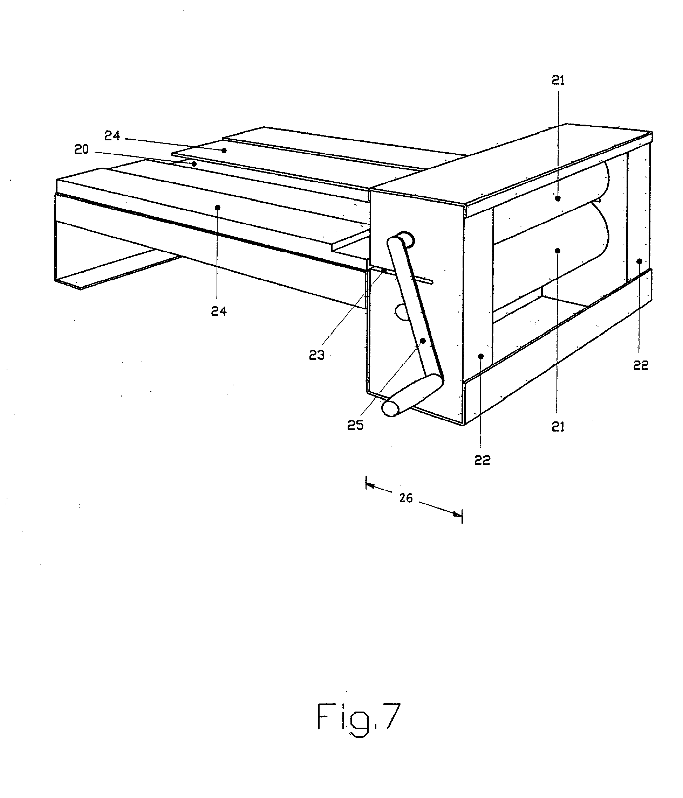

à la figure 7, la représentation, en perspective, d'une machine pour la fabrication de plaques de signalisation selon l'invention, cette machine étant alimenté par un support transparent et par une pellicule réfléchissante;

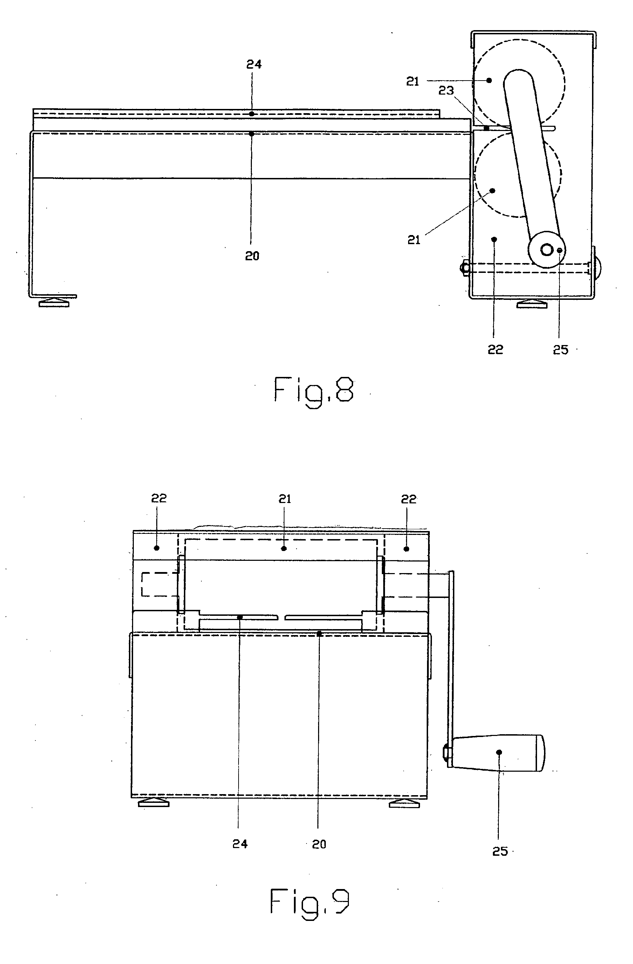

à la figure 8, la représentation de la vue latérale droite de la machine représentée dans la figure antérieure;
à la figure 9, la représentation de la vue frontale de la machine représentée à la figure 7.

En particulier, les figures citées montrent:
1 - plaque de signalisation
2 - support
3 - pellicule réfléchissante
4 - pellicule de base rétroréfléchissante
5 - couche de revêtement
6 - colle
7 - caractères imprimés
8 - roue
9 - axe de la roue
10 - couche de silicone
11 - dispositif en forme de bec de canard
12 - réservoir
13 - sécheur thermique
14 - rouleau fournisseur
15 - rouleau récepteur
16 - tendeur
17 - rouleau auxiliaire
20 - plateau
21 - rouleau de laminage
22 - structure d'appui des rouleaux de laminage
23 - entaille de la structure d'appui des rouleaux de laminage
24 - guide
25 - manivelle
26 - largeur de la structure d'appui des rouleaux de laminage
51 - gel de revêtement
52 - pellicule de revêtement

### FORME PARTICULIÈRE DE MATÉRIALISER L'INVENTION

Selon ce qu'on a référé auparavant, la pellicule réfléchissante susceptible d'être imprimée dans une imprimante à jet d'encre peut être obtenue au moyen d'une machine simple, alimentée par gel et par une pellicule de base avec la face rétroréfléchissante adhésive ou non, et de petites dimensions, une fois que la roue (8) peut avoir un rayon de 250 mm.

La pellicule réfléchissante (3) ainsi obtenue est prêtre à être imprimée, par exemple, avec des caractères, dessins ou photographies, dans une imprimante à jet d'encre.

La machine à laminage pour la fabrication des plaques de signalisation (1) est également simple, et elle peut être conçue sur une échelle qui la rend aisément transportable.

En effet, cette machine pourra avoir seulement 380 mm de longueur, 200 mm de largeur et 180 mm d'hauteur.

En outre, dans une forme préférentielle d'exécution de cette machine, l'entaille de la structure d'appui (23) aura une profondeur d'environ 2/3 de la largeur de cette structure et les axes horizontaux de rotation des rouleaux de laminage seront placés dans le même plan vertical ou dans un même plan légèrement incliné vers l'un ou l'autre côté de ce plan vertical.

### BIBLIOGRAPHIE

[1] http://www.ineossilicas.com/downloads/inkjet.pdf
[2] http://www.sartomer.com/wpapers/4967.pdf
[3] http://www.ontspct.com/ink_jet_receptive_coatings.htm

## Revendications

1. - Plaque de signalisation (1) intégrant un support (2) et une pellicule réfléchissante (3) susceptible d'être imprimée, **caractérisée en ce que** la pellicule réfléchissante (3) résulte uniquement de l'assemblage d'une pellicule de base rétroréfléchissante (4) avec une couche de revêtement (5) - sous la forme de gel de revêtement (51) ou à l'état solide de pellicule de revêtement (52) - avec d'environ 10 microns d'épaisseur, celle-là couverte par celle-ci et celle-ci, une fois à l'état solide, est transparente et adéquate à être imprimée dans une imprimante à jet d'encre, et **en ce que** la plaque de signalisation (1) résulte de l'assemblage de cette pellicule réfléchissante (3) déjà imprimée avec un support (2) transparent, cet assemblage se réalisant par collage sous pression.

2. - Plaque de signalisation (1) intégrant un support (2) et une pellicule réfléchissante (3) selon la revendication 1, **caractérisée en ce que** la pellicule réfléchissante (3) résulte de l'assemblage d'une pellicule de base de face rétroréfléchissante (4) adhésive avec une pellicule transparente de revêtement (52) à l'état solide, l'assemblage de ces pellicules se réalisant au moyen de la capacité adhésive de cette pellicule de base (4).

3. Plaque de signalisation (1) intégrant un support (2) et une pellicule réfléchissante (3) selon la revendication 1, **caractérisée en ce que** la pellicule réfléchissante (3) résulte du dépôt d'un gel de revêtement (51) sur la face rétroréfléchissante non adhésive d'une pellicule de base (4), ce gel (51) une fois sec se solidarise avec la pellicule de base (4), compte tenu les caractéristiques intrinsèques de ce gel.

4. - Machine pour la fabrication d'une pellicule réfléchissante (3) selon la revendication 1, **caractérisée en ce qu'**elle est pourvue d'une roue (8) qui tourne selon un axe (9) horizontal, **en ce que** cette roue est revêtue d'une ferme couche de silicone (10), **en ce qu'**elle est pourvue, sur la partie supérieure de la roue (8), d'un dispositif en forme de bec de canard (11), ce dispositif étant préparé pour qu'on lui assemble un réservoir (12) qui renferme du gel (51), dont l'ouverture plus grande ou plus petite du bec sert à doser le passage dudit gel, **en ce que**, au tour de la roue (8), il est placé d'au moins un sécheur thermique (13) et d'au moins deux rouleaux, l'un d'entre eux fournit (14) la machine avec la pellicule de base (4) et l'autre - le récepteur (15) - sert à enrouler la pellicule réfléchissante (3) achevée, ces pellicules étant dûment tenues au moyen de tendeurs (16) pourvus également par la machine.

5. - Machine selon la revendication antérieure pour la fabrication d'une pellicule réfléchissante (3) selon la deuxième revendication, **caractérisée en ce que** le rouleau récepteur (15) est situé en arrière du dispositif en forme de bec de canard (11), **en ce que** le rouleau fournisseur (14) est situé au-dessous du rouleau récepteur (15), **en ce qu'**au-dessous de celui-ci est situé un rouleau auxiliaire (17) qui sert à enrouler le fil protecteur de la face rétroréfléchissante adhésive de la pellicule de base et **en ce qu'**elle dispose d'un petit rouleau métallique qui se situe juste en arrière du dispositif en forme de bec de canard (11) et se trouve adossé contre la couche de silicone (10) de la roue, en fonctionnant soit comme tendeur (16) de la pellicule de base, soit comme rouleau de pression.

6. - Machine selon la revendication 4 pour la fabrication d'une pellicule réfléchissante (3) selon la revendication 3, **caractérisée en ce que** le rouleau fournisseur (14) de pellicule de base (4), rétroréfléchissante non adhésive, se situe juste en arrière du dispositif en forme de bec de canard (11), **en ce que**, au-dessous de ce rouleau, il se situe le rouleau récepteur (15) et **en ce qu'**elle dispose de deux petits rouleaux avec la fonction de tendeurs (16) qui se situent juste en arrière et au-dessous du dispositif en forme de bec de canard (11) et qui sont adossés contre la couche de silicone (10) de la roue - l'un associé au rouleau fournisseur (14) et l'autre, métallique, associé au rouleau récepteur (15) - ceci fonctionnant soit comme tendeur (16), soit comme rouleau de pression.

7. - Machine selon la revendication 4 pour la fabrication d'une pellicule réfléchissante (3) **caractérisée en ce que** le dispositif en forme de bec de canard (11) dispose d'une valve régulatrice de la sortie du gel de revêtement.

8. - Machine selon la revendication 4 pour la fabrication d'une pellicule réfléchissante (3) **caractérisée en ce que** chaque sécheur thermique (13) est pourvu d'un ventilateur et d'une résistance électrique.

9. - Machine pour la fabrication de plaques de signalisation (1) selon la revendication 1 alimentée par un support transparent et par une pellicule réfléchissante (3) **caractérisée en ce qu'**elle possède un plateau (20), une guide ou plus (24), deux rouleaux de laminage (21) positionnés l'un sur l'autre et qui sont supportés par une structure d'appui (22) en nylon ou en matériel similaire, le rouleau supérieur étant actionné par une manivelle (25) et la distance entre eux étant toujours moindre que l'épaisseur de la plaque de signalisation, et **en ce que**, au bout du plateau et sur son plan, la structure d'appui est pourvue d'une entaille (23).

10. - Machine pour la fabrication de plaques de signalisation (1) selon la revendication antérieure **caractérisée en ce que** le rouleau de laminage supérieur est réglé en hauteur.

11. - Machine pour la fabrication de plaques de signalisation (1) selon la revendication 9, **caractérisée en ce que** le rouleau de laminage (21) supérieur est revêtu par caoutchouc et le rouleau de laminage (21) inférieur est métallique.

12. - Machine pour la fabrication de plaques de signalisation (1) selon la revendication 9, **caractérisée en ce que** la guide (24) ou guides peuvent se déplacer selon des mouvements de translation.

13. - Machine pour la fabrication de plaques de signalisation (1) selon la revendication 9, **caractérisée en ce que** l'entaille de la structure d'appui (23) a une profondeur d'environ 2/3 de la largeur de cette structure.

14. - Machine pour la fabrication de plaques de signalisation (1) selon la revendication 9, **caractérisée en ce que** les axes horizontaux de rotation des rouleaux de laminage (21) sont dans le même plan vertical ou dans le même plan légèrement incliné pour l'un ou pour l'autre côté de ce plan vertical.

15. - Procédé de fabrication d'une plaque de signalisation (1) selon la revendication 1, **caractérisé en ce qu'**il comprend les étapes suivantes:
- Obtention d'une pellicule réfléchissante (3) susceptible d'être imprimée dans une imprimante à jet d'encre uniquement au moyen de l'assemblage, par collage - soit par les caractéristiques intrinsèques de la couche de revêtement (5), soit aussi par la capacité adhésive de la pellicule de base (4) - et par pression, d'une pellicule de base rétroréfléchissante (4) avec une couche de revêtement (5) sous la forme de gel ou à l'état solide.
- Impression de la pellicule réfléchissante dans une imprimante à jet d'encre.
- Collage sous pression de la pellicule réfléchissante déjà imprimée à un support transparent.
